# EUROPEAN PATENT APPLICATION

(11) **EP 3 910 589 A1**
(43) Date of publication of application: **17.11.2021**
(21) Application number: 20845655.8
(22) Date of filing: 19.03.2020
(51) Int. Cl.: G06T 7/00, G06T 5/50

(54) **IMAGE REGISTRATION METHOD AND APPARATUS, RADIOTHERAPY DEVICE AND COMPUTER READABLE STORAGE MEDIUM**

(71) Applicant: Our United Corporation, Xi'an, Shaanxi 710018 (CN)
(72) Inventor: YAN, Hao, Shaanxi, 710018 (CN)
(74) Representative: Sticht, Andreas
(86) International application number: PCT/CN2020/080267
(87) International publication number: WO 2021/184314

(57) **Abstract**

Embodiments of the present disclosure provide a method for image registration, an apparatus for image registration, a radiotherapy device, and a computer-readable storage medium. The method for image registration includes acquiring a first image and a second image; identifying a to-be-registered area in the first image and the second image respectively, generating a first to-be-registered image that includes only the to-be-registered area and a second to-be-registered image that includes only the to-be-registered area, and then registering the first to-be-registered image and the second to-be-registered image. Since the first to-be-registered image includes only the to-be-registered area, and the second to-be-registered image includes only the to-be-registered area, registration based on the first to-be-registered image and the second to-be-registered image can avoid interferences with the to-be-registered area by other areas in the first image and the second image during registration directly based on the first image and the second image, thereby improving the registration precision. At the same time, small size of data is used for registration based on the first to-be-registered image and the second to-be-registered image, thereby saving the time for registration and improving the speed of registration.

## Description

### TECHNICAL FIELD

Embodiments of the present disclosure relate to the field of image processing, and more particularly to, a method, apparatus, radiotherapy device, and computer-readable storage medium for image registration.

### BACKGROUND

Image registration is a process of registering and superimposing two or more images acquired at different time, by different imaging devices, or under different conditions, and is widely used in various fields, such as radiotherapy. The radiotherapy is a means of treating a tumor using radioactive rays. One of its key technologies is to maintain precise positioning of the tumor during the treatment. In a practical radiotherapy process, involuntary movement and organ movement of a patient will more or less displace the tumor. These different degrees of movement will all affect the accurate implementation of radiotherapy.

In view of this problem, images of a target area of the tumor of the patient during the treatment may be collected by image-guided technologies in real time, and the images are registered with an image of the target area of the tumor obtained before the treatment to determine an offset of the target area of the tumor, and then perform corresponding compensation and control based on the offset. In related technologies, when the images of the target area of the tumor during the treatment are registered with the image of the target area of the tumor acquired before the treatment, two images are directly used for registration, which has a large data size and more interferences, resulting in low registration precision.

### SUMMARY

In view of this, a technical problem to be solved by embodiments of the present disclosure is to provide a method, apparatus, radiotherapy device, and computer-readable storage medium for image registration, to overcome the defects of low registration precision caused by large data size and more interferences of related technologies when registering images of a target area of a tumor during treatment and an image of the target area of the tumor acquired before treatment.

In a first aspect, an embodiment of the present disclosure provides a method for image registration, including: acquiring a first image and a second image; identifying a to-be-registered area in the first image and the second image respectively, and generating a first to-be-registered image that includes only the to-be-registered area and a second to-be-registered image that includes only the to-be-registered area; and registering the first to-be-registered image and the second to-be-registered image.

In a second aspect, an embodiment of the present disclosure provides a method for image registration, including: acquiring a computed tomography (CT) image and a KV image of a target object, the KV image being an image obtained by imaging the target object at a preset shooting angle; projecting the CT image at the preset shooting angle to obtain a two-dimensional projection image; identifying a to-be-registered area in the two-dimensional projection image and the KV image respectively, and generating a first to-be-registered image that includes only the to-be-registered area and a second to-be-registered image that includes only the to-be-registered area; and registering the first to-be-registered image and the second to-be-registered image.

In a third aspect, an embodiment of the present disclosure provides a method for image registration, including: acquiring a computed tomography (CT) image and a KV image of a target object, the KV image being an image obtained by imaging the target object at a preset shooting angle; identifying a to-be-registered area in the CT image and the KV image respectively, and generating a first to-be-registered image that includes only the to-be-registered area and a second to-be-registered image that includes only the to-be-registered area; and registering the first to-be-registered image and the second to-be-registered image.

In a fourth aspect, an embodiment of the present disclosure provides a method for image registration, including: acquiring a computed tomography (CT) image and at least two KV images of a target object, the at least two KV images being images obtained by imaging the target object at at least two preset shooting angles respectively; reconstructing the at least two KV images to obtain a three-dimensional reconstructed image; identifying a to-be-registered area in the three-dimensional reconstructed image and the CT image respectively, and generating a first to-be-registered image that includes only the to-be-registered area and a second to-be-registered image that includes only the to-be-registered area; and registering the first to-be-registered image and the second to-be-registered image.

In a fifth aspect, an embodiment of the present disclosure provides an apparatus for image registration, including: an image acquiring module configured to acquire a first image and a second image; an image generating module configured to identify a to-be-registered area in the first image and the second image respectively, and generate a first to-be-registered image that includes only the to-be-registered area and a second to-be-registered image that includes only the to-be-registered area; and an image registering module configured to register the first to-be-registered image and the second to-be-registered image.

In a sixth aspect, an embodiment of the present disclosure provides an apparatus for image registration, including: an image acquiring module configured to acquire a computed tomography (CT) image and a KV image of a target object, the KV image being an image obtained by imaging the target object at a preset shooting angle; an image projecting module configured to project the CT image at the preset shooting angle to obtain a two-dimensional projection image; an image generating module configured to identify a to-be-registered area in the two-dimensional projection image and the KV image respectively, and generate a first to-be-registered image that includes only the to-be-registered area and a second to-be-registered image that includes only the to-be-registered area; and an image registering module configured to register the first to-be-registered image and the second to-be-registered image.

In a seventh aspect, an embodiment of the present disclosure provides an apparatus for image registration, including: an image acquiring module configured to acquire a computed tomography (CT) image and a KV image of a target object, the KV image being an image obtained by imaging the target object at a preset shooting angle; an image generating module configured to identify a to-be-registered area in the CT image and the KV image respectively, and generate a first to-be-registered image that includes only the to-be-registered area and a second to-be-registered image that includes only the to-be-registered area; and an image registering module configured to register the first to-be-registered image and the second to-be-registered image.

In an eighth aspect, an embodiment of the present disclosure provides an apparatus for image registration, including: an image acquiring module configured to acquire at least two KV images and a computed tomography (CT) image of a target object, the at least two KV images being images obtained by imaging the target object at at least two preset shooting angles respectively; an image reconstructing module configured to reconstruct the at least two KV images to obtain a three-dimensional reconstructed image; an image generating module configured to identify a to-be-registered area in the three-dimensional reconstructed image and the CT image respectively, and generate a first to-be-registered image that includes only the to-be-registered area and a second to-be-registered image that includes only the to-be-registered area; and an image registering module configured to register the first to-be-registered image and the second to-be-registered image.

In a ninth aspect, an embodiment of the present disclosure provides a radiotherapy device, including a processor and a memory, the memory storing program instructions, the processor being configured to invoke the program instructions in the memory to execute the method according to any one of the first aspect to the fourth aspect.

In a tenth aspect, an embodiment of the present disclosure provides a computer storage medium, storing a computer program, where the computer program includes program instructions, and the program instructions, when executed by a processor, cause the processor to execute the method according to any one of the first aspect to the fourth aspect.

The method for image registration provided by embodiments of the present disclosure acquires a first image and a second image, identifies a to-be-registered area in the first image and the second image respectively, generates a first to-be-registered image that includes only the to-be-registered area and a second to-be-registered image that includes only the to-be-registered area, and then registers the first to-be-registered image and the second to-be-registered image. Since the first to-be-registered image includes only the to-be-registered area, and the second to-be-registered image includes only the to-be-registered area, registration based on the first to-be-registered image and the second to-be-registered image can avoid interferences with the to-be-registered area by other areas in the first image and the second image during registration directly based on the first image and the second image, thereby improving the registration precision. At the same time, since the first to-be-registered image includes only the to-be-registered area but excludes other areas in the first image, and the second to-be-registered image includes only the to-be-registered area but excludes other areas in the second image, small size of data is used for registration based on the first to-be-registered image and the second to-be-registered image, thereby saving the time for registration and improving the speed of registration.

### BRIEF DESCRIPTION OF THE DRAWINGS

Some specific embodiments of embodiments of the present disclosure will be described in detail below with reference to the accompanying drawings in an example manner, instead of a limiting manner. Identical reference numerals in the accompanying drawings represent identical or similar components or parts. It should be understood by those skilled in the art that these accompanying drawings may not be drawn to scale. In the drawings:
FIG. 1 is a schematic flowchart of a method for image registration provided in an embodiment of the present disclosure;
FIG. 2 is a schematic flowchart of a method for image registration provided in an embodiment of the present disclosure;
FIG. 3 is a logical block diagram of a method for image registration provided in an embodiment of the present disclosure;
FIG. 4 is a schematic flowchart of a method for image registration provided in an embodiment of the present disclosure;
FIG. 5 is a logical block diagram of a method for image registration provided in an embodiment of the present disclosure;
FIG. 6 is a schematic flowchart of a method for image registration provided in an embodiment of the present disclosure;
FIG. 7 is a logical block diagram of a method for image registration provided in an embodiment of the present disclosure;
FIG. 8 is a schematic diagram of an application scenario of a method for image registration provided in an embodiment of the present disclosure;
FIG. 9 is a schematic diagram of an application scenario of a method for image registration provided in an embodiment of the present disclosure;
FIG. 10 is a schematic diagram of an application scenario of a method for image registration provided in an embodiment of the present disclosure;
FIG. 11 is a schematic structural diagram of an apparatus for image registration provided in an embodiment of the present disclosure;
FIG. 12 is a schematic structural diagram of an apparatus for image registration provided in an embodiment of the present disclosure;
FIG. 13 is a schematic structural diagram of an apparatus for image registration provided in an embodiment of the present disclosure;
FIG. 14 is a schematic structural diagram of an apparatus for image registration provided in an embodiment of the present disclosure; and
FIG. 15 is a schematic structural diagram of a radiotherapy device provided in an embodiment of the present disclosure.

### DETAILED DESCRIPTION

In order to make the principles and advantages of embodiments of the present disclosure clearer, the embodiments of the present disclosure will be further described in detail below with reference to the accompanying drawings. Obviously, the described embodiments are some embodiments, rather than all embodiments, of the present disclosure. Unless otherwise defined, the technical terms or scientific terms used in the embodiments of the present disclosure should be of general meaning as understood by those with ordinary skills in the art to which the present disclosure belongs. "First," "second," and similar words used in the embodiments of the present disclosure do not imply any order, quantity, or importance, but are only used for distinguishing different components.

Specific implementations of the embodiments of the present disclosure will be further described below with reference to the accompanying drawings of the embodiments of the present disclosure.

### Embodiment I

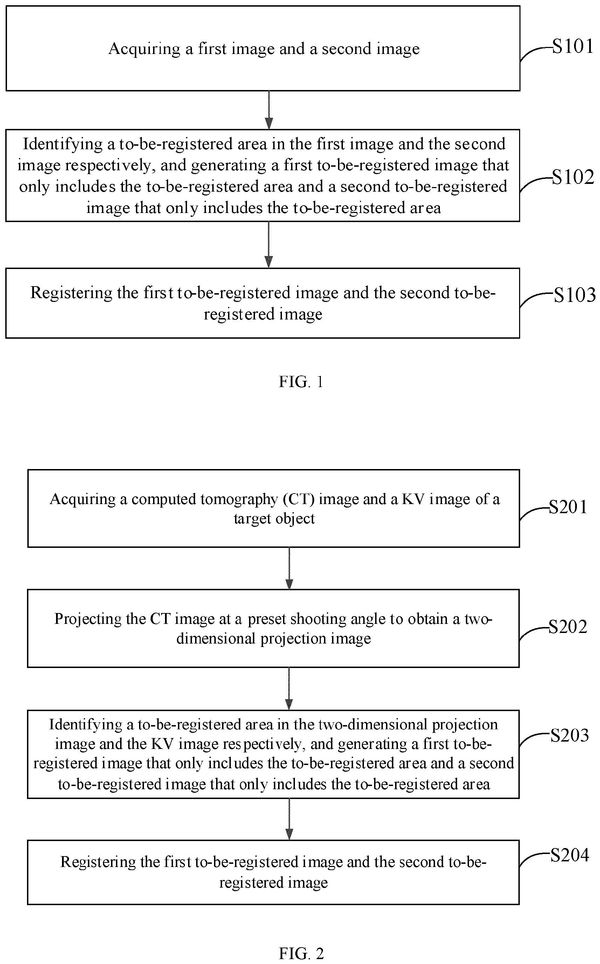

FIG. 1 is a schematic flowchart of a method for image registration provided in the embodiment of the present disclosure. As shown in FIG. 1, the method for image registration provided in this embodiment may include:
S101: acquiring a first image and a second image.

In this embodiment, the first image and the second image may be images obtained by photographing a given target object by a given radiographing device or different radiographing devices. The radiographing device may be a common video camera, a camera of a terminal device, an imaging device that is connected or not connected to a medical device, or the like. The target object may be any object of interest.

In this embodiment, the first image and the second image may both be two-dimensional images, or both be three-dimensional images. Or, one of the first image or the second image is a two-dimensional image, while the other one is a three-dimensional image. This is not limited in this embodiment.

S102: identifying a to-be-registered area in the first image and the second image respectively, and generating a first to-be-registered image that includes only the to-be-registered area and a second to-be-registered image that includes only the to-be-registered area.

In this embodiment, the to-be-registered area may be a to-be-registered area of interest in the first image and the second image, e.g., an area where the target object is located. The first to-be-registered image may be an image obtained by directly eliminating areas outside the to-be-registered area in the first image, or may be an image obtained by processing the image obtained by directly eliminating the areas outside the to-be-registered area in the first image, or may be an image obtained by eliminating the areas outside the to-be-registered area in the processed first image, or may be an image that includes only the to-be-registered area and is extracted from the first image using technologies, such as edge detection, edge recognition, and feature extraction. Similarly, the second to-be-registered image may be an image obtained by directly eliminating areas outside the to-be-registered area in the second image, or may be an image obtained by processing the image obtained by directly eliminating the areas outside the to-be-registered area in the second image, or may be an image obtained by eliminating the areas outside the to-be-registered area in the processed second image, or may be an image that includes only the to-be-registered area and is extracted from the second image using the technologies, such as edge detection, edge recognition, and feature extraction. Since the first image and/or the second image may be a two-dimensional image or a three-dimensional image, the first to-be-registered image and the second to-be-registered image may also be two-dimensional images or three-dimensional images.

It should be noted that in this embodiment, the to-be-registered area may be identified in the first image and the second image by various approaches, and the first to-be-registered image that includes only the to-be-registered area and the second to-be-registered image that includes only the to-be-registered area may be generated. Here, two specific implementations are listed for illustration.

In an embodiment, the to-be-registered area may be identified in the first image and the second image using an image that includes only a contour of the to-be-registered area, and the first to-be-registered image that includes only the to-be-registered area and the second to-be-registered image that includes only the to-be-registered area may be generated. The contour of the to-be-registered area in the image that includes only the contour of the to-be-registered area is predetermined, and may be manually delineated by operating an external device of a computer, or may be automatically delineated with a computer based on deep learning, or may be acquired with a computer based on technologies, such as edge detection, edge recognition, and feature extraction. For example, a logical AND operation may be performed on the image that includes only the outer contour of the to-be-registered area and the first image to obtain the first to-be-registered image that includes only the to-be-registered area, and a logical AND operation may be performed on the image that includes only the outer contour of the to-be-registered area and the second image to obtain the second to-be-registered image that includes only the to-be-registered area. Of course, here, only example description is provided, which does not represent that the present disclosure is limited to this.

In this implementation, the to-be-registered area may be identified in the first image and the second image using the image that includes only the outer contour of the to-be-registered area, thereby avoiding dependence on quality of the first image and the second image when identifying the to-be-registered area, and improving the identification precision of the to-be-registered area. At the same time, the image that includes only the outer contour of the to-be-registered area is predetermined, and is not required to be re-identified during use, thereby saving the time for identifying the to-be-registered area.

In a second implementation, the to-be-registered area may be identified in the first image and the second image using a contour detection method, e.g., by extracting, identifying or performing other operations on contours in the first image and the second image respectively based on grayscale, color, and the like of the first image and the second image.

S103: registering the first to-be-registered image and the second to-be-registered image.

Image registration refers to seeking a (or a series of) spatial transformation(s) for an image, such that corresponding points on the transformed image and on another image are spatially consistent. During image registration, the two to-be-registered images should have the same dimension, i.e., both be two-dimensional or three-dimensional images. For example, in a registration mode, the two to-be-registered images are both two-dimensional images, and are planarly registered; while in another registration mode, the two to-be-registered images are both three-dimensional images, and are planarly registered.

The image registration result may be expressed as, but is not limited to, relative position coordinates of a given locating point between the images, a transformation matrix between the images, and a corresponding relationship table between each image area with the same name among the images. For example, in this embodiment, an offset between the first to-be-registered image and the second to-be-registered image may be obtained by registering the first to-be-registered image and the second to-be-registered image.

It should be noted that the method for image registration can be applied to the fields, such as medical image analysis, remote sensing image processing, and target recognition, which are not limited in this embodiment.

The method for image registration provided by the embodiment of the present disclosure acquires a first image and a second image, identifies a to-be-registered area in the first image and the second image respectively, generates a first to-be-registered image that includes only the to-be-registered area and a second to-be-registered image that includes only the to-be-registered area, and then registers the first to-be-registered image and the second to-be-registered image. Since the first to-be-registered image includes only the to-be-registered area, and the second to-be-registered image includes only the to-be-registered area, registration based on the first to-be-registered image and the second to-be-registered image can avoid interferences with the to-be-registered area by other areas in the first image and the second image during registration directly based on the first image and the second image, thereby improving the registration precision. At the same time, since the first to-be-registered image includes only the to-be-registered area but excludes other areas in the first image, and the second to-be-registered image includes only the to-be-registered area but excludes other areas in the second image, small size of data is used for registration based on the first to-be-registered image and the second to-be-registered image, thereby saving the time for registration and improving the speed of registration.

### Embodiment II

Embodiment II of the present disclosure provides a method for image registration for radiotherapy. The method for image registration can be applied to a medical device. Here, the medical device in the embodiment of the present disclosure is illustrated as a radiotherapy device. The radiotherapy device may include, but is not limited to, a patient fixing mechanism and at least one radiographing device. The radiographing device can take a medical image of an affected part of a patient on the patient fixing mechanism at a preset shooting angle as actually required. In an example, the method for image registration may be installed on the radiotherapy device (e.g., the radiotherapy device, the radiographing device, or an operating table) in the form of software, so as to be applied to an image registration process in a medical activity. As an example, an executing body of the method for image registration may be, e.g., a controller of the radiotherapy device, a processor of the radiotherapy device, a control apparatus connected to the radiotherapy device, or a server connected to the radiotherapy device. For ease of description, the method for image registration executed by the controller of the radiotherapy device is taken as an example for description below.

Referring to FIG. 2, FIG. 2 is a schematic flowchart of a method for image registration provided in the embodiment of the present disclosure. As shown in FIG. 2, the method for image registration may include the following steps:
S201: acquiring a computed tomography (CT) image and a KV image of a target object.
The KV image is an image obtained by imaging the target object at a preset shooting angle.

In this embodiment, the target object is used to denote an object of interest in a medical activity, e.g., an affected part or a target area of a patient during radiotherapy or a surgical operation, such as a focal area in the radiotherapy, an anatomical site, or a tumor and surrounding vascular tissues in an intracranial tumor resection. The affected part or the target area of the patient may be located in his head such as an intracranial tumor, or in his body such as a lung tumor.

The radiographing device in the radiotherapy device may obtain a two-dimensional KV image by imaging the target object at the preset shooting angle. The radiographing device may include a bulb tube and an X-ray detector that are arranged oppositely. X-rays emitted from the bulb tube can be received by the detector after passing through the target object to form the KV image. The preset shooting angle may be, e.g., a shooting angle that is required for radiographing, and is predetermined as actually required. The radiographing device can obtain the KV image at the preset shooting angle by shooting at the preset shooting angle by various approaches as actually required.

For example, in an application scenario, the radiotherapy device may include a patient fixing mechanism and a radiographing device. The radiographing device can rotate around the patient fixing mechanism to the preset shooting angle to acquire the KV image by radiographing the affected part of the patient on the patient fixing mechanism. In this application scenario, the preset shooting angle may be expressed as an angle value representing an azimuth in a planar polar coordinate system, and the origin is a point around which the radiographing device rotates.

For example, in another application scenario, the radiotherapy device may include the patient fixing mechanism and at least two radiographing devices. The radiographing devices are arranged at different shooting angles relative to the patient fixing mechanism. Each radiographing device corresponds to a shooting angle, the preset shooting angle may include at least one shooting angle, and the affected part of the patient on the patient fixing mechanism is radiographed at the preset shooting angle. In this application scenario, the preset shooting angle may be expressed as an angle value representing an azimuth in a planar polar coordinate system, and the origin is a specific point on the patient fixing mechanism.

For example, in still another application scenario, the radiotherapy device may include the patient fixing mechanism and at least two radiographing devices. The radiographing devices can rotate around the patient fixing mechanism to different shooting angles, such that radiographing of the affected part of the patient can be completed once by using the at least two radiographing devices, thereby improving the radiograph collection frequency. The preset shooting angle may include at least one shooting angle, and the affected part of the patient on the patient fixing mechanism is radiographed at the preset shooting angle. In this application scenario, the preset shooting angle may be expressed as an angle value representing an azimuth in a planar polar coordinate system, and the origin is a point around which the radiographing devices rotate.

It should be noted that the KV image may be an image obtained by imaging the target object using the radiographing device during treatment, and may represent a current position of the target object, e.g., a current position state of the affected part of the patient.

The computed tomography (CT) image is a three-dimensional image obtained in a planning stage by imaging the target object, e.g., the affected part of the patient, using a computed tomography imaging technology and then by three-dimensional reconstruction. The planning stage refers to imaging the affected part of the patient before radiotherapy is performed on the patient, and formulating a treatment plan for the patient based on the image of the affected part. The treatment plan for the patient may be formulated based on the CT image obtained in the planning stage. The treatment plan may include the number of target sites, shapes of the target sites, a treatment duration of each target site, a planned dose of each target site, and the like. For example, the contour of each area can be delineated on the CT image to obtain a three-dimensional delineated outline of each area. These areas may include: a target area, an organ at risk, a bone structure, and the like; at the same time, dose distribution can be planned in each area based on prescribed dose, such that the final treatment plan system includes the CT image of the affected part of the patient, a contour line of each area in the CT image of the affected part of the patient, and the dose distribution of each area. In this embodiment, the CT image may be acquired by a controller of the radiotherapy device from a CT imaging device through communication connection, or from a related memory or other systems through communication connection. The CT imaging technology may be a cone beam CT (CBCT) technology, a single slice helical CT (SSCT) technology, a multi-slice helical CT (MSCT) technology, or the like.

It should be noted that since the CT image is an image obtained by imaging the target object in the planning stage, i.e., before radiotherapy, the CT image may denote an initial position of the target object, e.g., an initial position of the affected part of the patient.

In this embodiment, by acquiring the CT image collected before radiotherapy and the KV image collected in real time during radiotherapy, information required for the medical activity can be provided based on comparison of the CT image and the KV image, for example, a deviation between an irradiation position of a radiation beam for treatment and a position of the target area during radiotherapy, or whether a to-be-excised part has moved during a surgical operation.

S202: projecting the CT image at a preset shooting angle to obtain a two-dimensional projection image.

The CT image is a three-dimensional image obtained by imaging the target object using a computed tomography imaging technology and then by three-dimensional reconstruction. The two-dimensional projection image at the preset shooting angle corresponding to the KV image can be obtained by projecting the CT image at the preset shooting angle identical to the preset shooting angle at which the radiographing device acquires the KV image. In this embodiment, the two-dimensional projection image may also be referred to as a digitally reconstructed radiograph (DRR).

S203: identifying a to-be-registered area in the two-dimensional projection image and the KV image respectively, and generating a first to-be-registered image that includes only the to-be-registered area and a second to-be-registered image that includes only the to-be-registered area.

An approach of generating the first to-be-registered image and the second to-be-registered image in this embodiment is similar to the approach of acquiring the first to-be-registered image and the second to-be-registered image in step S102 of Embodiment I.

For example, in an implementation, the to-be-registered area may be identified in the CT image and the KV image using a contour detection method, e.g., by extracting, identifying or performing other operations on contours in the CT image and the KV image respectively based on grayscale, color, and the like of the CT image and the KV image.

For another example, in an implementation, the to-be-registered area may be identified in the two-dimensional projection image and the KV image respectively using an image that includes only a contour of the to-be-registered area, and the first to-be-registered image that includes only the to-be-registered area and the second to-be-registered image that includes only the to-be-registered area may be generated. The contour of the to-be-registered area in the image that includes only the contour of the to-be-registered area may be predetermined, and may be manually delineated by operating an external device of a computer, or may be automatically delineated with a computer based on deep learning, or may be acquired with a computer based on technologies, such as edge detection, edge recognition, and feature extraction. The to-be-registered area may be identified in the two-dimensional projection image and the KV image using the image that includes only the contour of the to-be-registered area, thereby avoiding dependence on quality of the two-dimensional projection image and the KV image when identifying the to-be-registered area, and improving the identification precision of the to-be-registered area. At the same time, the image that includes only the contour of the to-be-registered area is predetermined, and is not required to be re-identified during use, thereby saving the time for identifying the to-be-registered area.

Since a two-dimensional projection image obtained by projecting the KV image and the two-dimensional projection image obtained by projecting the CT image are both two-dimensional images, and the image that includes only the contour of the to-be-registered area is a three-dimensional image, in an implementation of the present disclosure, the identifying a to-be-registered area in the two-dimensional projection image and the KV image using an image that includes only a contour of the to-be-registered area, and generating a first to-be-registered image that includes only the to-be-registered area and a second to-be-registered image that includes only the to-be-registered area includes:
S203a: projecting the image that includes only the contour of the to-be-registered area at the preset shooting angle to obtain a two-dimensional mask image;
S203b: generating the first to-be-registered image that includes only the to-be-registered area based on the two-dimensional projection image and the two-dimensional mask image; and
S203c: generating the second to-be-registered image that includes only the to-be-registered area based on the KV image and the two-dimensional mask image.

Specifically, the image that includes only the contour of the to-be-registered area may be projected at the preset shooting angle identical to the preset shooting angle at which the radiographing device acquires the KV image, to obtain the two-dimensional mask image at the preset shooting angle corresponding to the KV image, and then identify the to-be-registered area in the two-dimensional KV image and the two-dimensional projection image through a two-dimensional image operation.

In order to reduce the computation complexity, in a specific implementation of the present disclosure, a logical AND operation may be performed on the two-dimensional mask image and the two-dimensional projection image to generate the first to-be-registered image that includes only the to-be-registered area; and a logical AND operation may be performed on the two-dimensional mask image and the KV image to generate the second to-be-registered image that includes only the to-be-registered area.

Alternatively, in an embodiment of the present disclosure, the image that includes only the contour of the to-be-registered area is an image that includes only a contour line of the to-be-registered area which is delineated in a treatment plan. Here, the approach and principle of acquiring the image that includes only the contour of the to-be-registered area are similar to those in Embodiment II of the present disclosure. In order to avoid repetition, the description will not be repeated here.

S204: registering the first to-be-registered image and the second to-be-registered image.

In this embodiment, an approach of registering the first to-be-registered image and the second to-be-registered image is similar to the approach of registering the first to-be-registered image and the second to-be-registered image in step S103 of the embodiment shown in FIG. 1. In this embodiment, the first to-be-registered image and the second to-be-registered image are both two-dimensional images. A two-dimensional offset can be directly obtained by registering a two-dimensional image and another two-dimensional image based on the first to-be-registered image and the second to-be-registered image, to provide the information required for the medical activity, for example, a deviation between an irradiation position of a radiation beam for treatment and a position of a target area during radiotherapy, or whether a to-be-excised part has moved during a surgical operation.

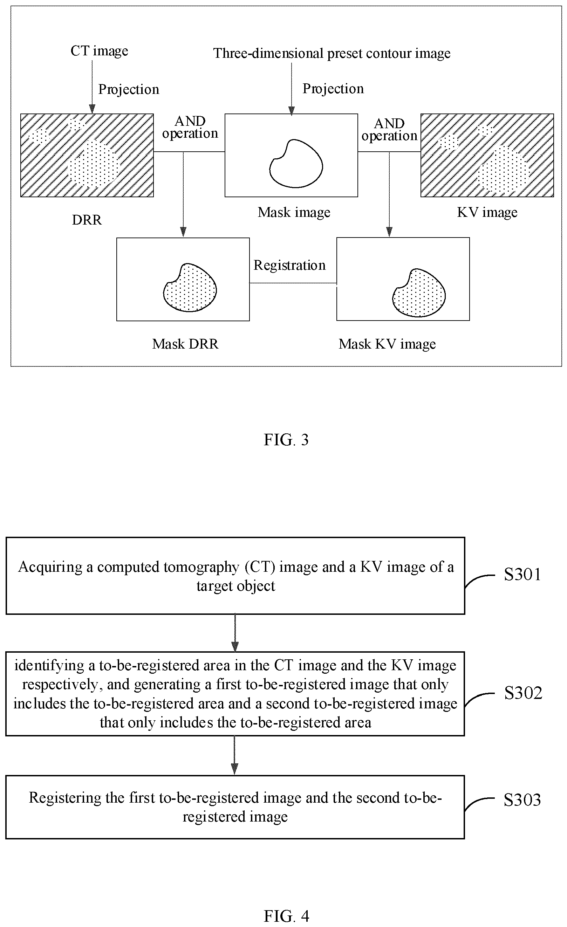

In order to facilitate better understanding of this embodiment, a specific implementation of a method for image registration provided in this embodiment will be described in detail below with reference to FIG. 3. As shown in FIG. 3, in this specific implementation, a DRR corresponds to the two-dimensional projection image in this embodiment, a three-dimensional preset contour image corresponds to the image that includes only the contour of the to-be-registered area in this embodiment, a mask image corresponds to the two-dimensional mask image in this embodiment, a mask DRR corresponds to the first to-be-registered image in this embodiment, and a mask KV image corresponds to the second to-be-registered image in this embodiment. As shown in FIG. 3, first, a CT image is projected at a preset shooting angle to obtain the DRR, and the three-dimensional preset contour image is projected at the preset shooting angle to obtain the mask image. Then, a logical AND operation is performed on the DRR and the mask image to obtain the mask DRR, and a logical AND operation is performed on the KV image and the mask image to obtain the mask KV image, so as to perform image registration based on the mask DRR and the mask KV image. Since the mask DRR is obtained based on a CT image collected before radiotherapy, and the mask KV image is obtained based on a KV image collected during radiotherapy, information required for a medical activity can be provided based on a registration result obtained by registering the mask DRR and the mask KV image, for example, a deviation between an irradiation position of a radiation beam for treatment and a position of a target area during radiotherapy, or whether a to-be-excised part has moved during a surgical operation.

It should be noted that the method for image registration provided in this embodiment can be applied to any one image-guided medical activity, such as image-guided radiotherapy (IGRT), an intracranial tumor resection, or other related image-guided surgical operations. This is not limited in this embodiment.

In this embodiment, a CT image and a KV image of a target object are acquired, the CT image is projected to obtain a two-dimensional projection image, a to-be-registered area is identified in the two-dimensional projection image and the KV image respectively, a first to-be-registered image that includes only the to-be-registered area and a second to-be-registered image that includes only the to-be-registered area are generated, and then the first to-be-registered image and the second to-be-registered image are registered. Since the first to-be-registered image is a two-dimensional image that includes only the to-be-registered area, and the second to-be-registered image is a two-dimensional image that includes only the to-be-registered area, registration based on the first to-be-registered image and the second to-be-registered image can avoid interferences with the to-be-registered area by other areas in the CT image and the KV image during registration directly based on the CT image and the KV image, thereby improving the registration precision. At the same time, since the first to-be-registered image includes only the to-be-registered area but excludes other areas, and the second to-be-registered image includes only the to-be-registered area but excludes other areas, small size of data is used for registration based on the first to-be-registered image and the second to-be-registered image, thereby saving the time for registration and improving the speed of registration.

### Embodiment III

The embodiment of the present disclosure provides a method for image registration for radiotherapy. The method for image registration provided in this embodiment is similar to the method for image registration provided in Embodiment II. The only difference thereof is that: the approach of generating the first to-be-registered image based on the CT image and the approach of generating the second to-be-registered image based on the KV image are different. As shown in FIG. 4, the method for image registration provided in this embodiment includes:
S301: acquiring a computed tomography (CT) image and a KV image of a target object, the KV image being an image obtained by imaging the target object at a preset shooting angle;
S302: identifying a to-be-registered area in the CT image and the KV image respectively, and generating a first to-be-registered image that includes only the to-be-registered area and a second to-be-registered image that includes only the to-be-registered area; and
S303: registering the first to-be-registered image and the second to-be-registered image.

Implementations of S301 and S303 are the same as the implementations of S201 and S204 in Embodiment II. This will not be repeated here.

In this embodiment, it is not necessary to first project the CT image to obtain a two-dimensional projection image, and then identify the to-be-registered area in the two-dimensional projection image, but necessary to directly identify the to-be-registered area in the CT image.

For example, in an implementation, the to-be-registered area may be identified in the CT image and the KV image using a contour detection method, e.g., by extracting, identifying or performing other operations on contours in the CT image and the KV image directly based on grayscale, color, and the like of the CT image and the KV image.

For another example, in an implementation, the to-be-registered area is identified in the CT image and the KV image respectively using an image that includes only the contour of the to-be-registered area, and the first to-be-registered image that includes only the to-be-registered area and the second to-be-registered image that includes only the to-be-registered area are generated. A contour of the to-be-registered area in the image that includes only the contour of the to-be-registered area may be predetermined, and may be manually delineated by operating an external device of a computer, or may be automatically delineated with a computer based on deep learning, or may be acquired with a computer based on technologies, such as edge detection, edge recognition, and feature extraction. The to-be-registered area may be identified in the CT image and the KV image using the image that includes only the contour of the to-be-registered area, thereby avoiding dependence on quality of the CT image and the KV image when identifying the to-be-registered area, and improving the identification precision of the to-be-registered area. At the same time, the image that includes only the contour of the to-be-registered area is predetermined, and is not required to be re-identified during use, thereby saving the time for identifying the to-be-registered area.

Since the CT image is a three-dimensional image, the KV image is a two-dimensional image, and the image that includes only the contour of the to-be-registered area may be a three-dimensional image, in an implementation of the present disclosure, the identifying the to-be-registered area in the CT image and the KV image respectively using an image that includes only a contour of the to-be-registered area, and generating the first to-be-registered image that includes only the to-be-registered area and the second to-be-registered image that includes only the to-be-registered area includes:
S302a: generating a mask CT image based on the CT image and the image that includes only the contour of the to-be-registered area;
S302b: projecting the mask CT image at the preset shooting angle to obtain the first to-be-registered image;
S302c: projecting the image that includes only the contour of the to-be-registered area at the preset shooting angle to obtain a two-dimensional mask image; and
S303d: generating the second to-be-registered image based on the KV image and the two-dimensional mask image.

Specifically, since the CT image and the image that includes only the contour of the to-be-registered area are both three-dimensional images, a mask CT image that includes only the to-be-registered area may be obtained directly based on the CT image and the image that includes only the contour of the to-be-registered area. In order to register a two-dimensional image and another two-dimensional image, it is necessary to project the mask CT image at the preset shooting angle at which the KV image is acquired, to obtain a two-dimensional first to-be-registered image. At the same time, since the KV image is a two-dimensional image, in order to identify the to-be-registered area in the KV image using a three-dimensional contour image that includes only the to-be-registered area, it is necessary to first obtain the two-dimensional mask image of the image that includes only the contour of the to-be-registered area, and then identify the to-be-registered area in the KV image based on the two-dimensional mask image to obtain a two-dimensional second to-be-registered image, and then register a two-dimensional image and another two-dimensional image. In this implementation, the mask CT image that includes only the to-be-registered area is determined from the CT image, and then the mask CT image is projected, thereby preventing other areas except for the to-be-registered area in the CT image from affecting the projection process, finally obtaining a high-quality image of a second to-be-registered area, and further improving the registration precision.

In order to reduce the computation complexity, in a specific implementation of the present disclosure, a logical AND operation may be performed on the CT image and the image that includes only the contour of the to-be-registered area to generate the mask CT image.

Likewise, in order to reduce the computation complexity, in a specific implementation of the present disclosure, a logical AND operation may be performed on the two-dimensional mask image and the KV image to generate the second to-be-registered image that includes only the to-be-registered area.

Alternatively, in an embodiment of the present disclosure, the image that includes only the contour of the to-be-registered area is an image that is delineated in a treatment plan, and includes only a contour line of the to-be-registered area. Here, the approach and principle of acquiring the image that includes only the contour of the to-be-registered area are similar to those in Embodiment II of the present disclosure. In order to avoid repetition, the description will not be repeated here.

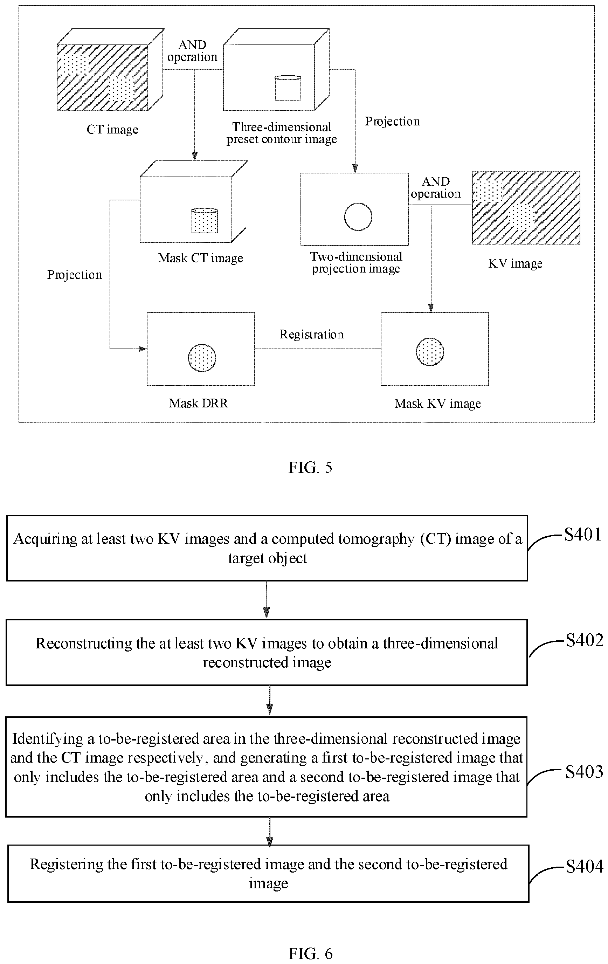

In order to facilitate better understanding of this embodiment, a specific implementation of a method for image registration provided in this embodiment will be described in detail below with reference to FIG. 5. As shown in FIG. 5, in this specific implementation, a three-dimensional preset contour image corresponds to an image that includes only a contour of a to-be-registered area, a mask DRR corresponds to the first to-be-registered image in this embodiment, and a mask KV image corresponds to the second to-be-registered image in this embodiment. First, a logical AND operation is performed on a CT image and the three-dimensional preset contour image to obtain a mask CT image, and then the mask CT image is projected at a preset shooting angle to obtain the mask DRR. The image that includes only the contour of the to-be-registered area is projected at the preset shooting angle to obtain a two-dimensional mask image, and a logical AND operation is performed on a KV image and the two-dimensional mask image to generate the mask KV image, so as to perform image registration based on the mask DRR and the mask KV image. Since the mask DRR is obtained based on a CT image collected before radiotherapy, and the mask KV image is obtained based on a KV image collected during radiotherapy, information required for a medical activity can be provided based on a registration result obtained by registering the mask DRR and the mask KV image, for example, a deviation between an irradiation position of a radiation beam for treatment and a position of a target area during radiotherapy, or whether a to-be-excised part has moved during a surgical operation.

It should be noted that the method for image registration provided in this embodiment can be applied to any one image-guided medical activity, such as image-guided radiotherapy (IGRT), an intracranial tumor resection, or other related image-guided surgical operations. This is not limited in this embodiment.

### Embodiment IV

FIG. 6 is a schematic flowchart of a method for image registration provided in an embodiment of the present disclosure. The method for image registration provided in this embodiment is similar to the method for image registration provided in Embodiment II and the method for image registration provided in Embodiment III, and the difference thereof is that the Embodiment III is used to register a three-dimensional image and another three-dimensional image. As shown in FIG. 6, the method for image registration provided in this embodiment includes:
S401: acquiring at least two KV images and a computed tomography (CT) image of a target object.
The at least two KV images are images obtained by imaging the target object at at least two preset shooting angles respectively.

In this embodiment, the KV images may be obtained by radiographing an affected part of a patient at different preset shooting angles using a radiographing device rotating around a patient fixing mechanism, or obtained by radiographing the affected part of the patient using a radiographing device arranged at at least two preset shooting angles, or obtained by radiographing the affected part of the patient at different preset shooting angles using at least two radiographing devices rotating around the patient fixing mechanism. The preset shooting angles may be equally distributed. For example, when the number of preset shooting angles is 6, the 6 shooting angles may be 0°, 60°, 120°, 180°, 240°, and 300°.

S402: reconstructing the at least two KV images to obtain a three-dimensional reconstructed image.

S403: identifying a to-be-registered area in the three-dimensional reconstructed image and the CT image respectively, and generating a first to-be-registered image that includes only the to-be-registered area and a second to-be-registered image that includes only the to-be-registered area.

An approach of generating the first to-be-registered image and the second to-be-registered image in this embodiment is similar to the approach of generating the first to-be-registered image and the second to-be-registered image in Embodiment I to Embodiment III.

For example, in an implementation, the to-be-registered area may be identified in the CT image and the three-dimensional reconstructed image using contour detection, e.g., by extracting, identifying or performing other operations on contours in the CT image and the three-dimensional reconstructed image respectively based on grayscale, color, and the like of the CT image and the three-dimensional reconstructed image.

For another example, in an implementation, the to-be-registered area may be identified in the three-dimensional reconstructed image and the CT image respectively using an image that includes only a contour of the to-be-registered area, and the first to-be-registered image that includes only the to-be-registered area and the second to-be-registered image that includes only the to-be-registered area may be generated. The contour of the to-be-registered area in the image that includes only the contour of the to-be-registered area may be predetermined, and may be manually delineated by operating an external device of a computer, or may be automatically delineated with a computer based on deep learning, or may be acquired with a computer based on technologies, such as edge detection, edge recognition, and feature extraction. The to-be-registered area may be identified in the CT image and the three-dimensional reconstructed image using the image that includes only the contour of the to-be-registered area, thereby avoiding dependence on quality of the CT image and the three-dimensional reconstructed image when identifying the to-be-registered area, and improving the identification precision of the to-be-registered area. At the same time, the image that includes only the contour of the to-be-registered area is predetermined, and is not required to be re-identified during use, thereby saving the time for identifying the to-be-registered area.

in order to reduce the computation complexity, in an embodiment of the present disclosure, a logical AND operation may be performed on the image that includes only the contour of the to-be-registered area and the three-dimensional reconstructed image to obtain the first to-be-registered image, and a logical AND operation may be performed on the image that includes only the contour of the to-be-registered area and the CT image to obtain the second to-be-registered image, thereby quickly and accurately determining the first to-be-registered image and the second to-be-registered image by simple mathematical operations.

Alternatively, in an embodiment of the present disclosure, the image that includes only the contour of the to-be-registered area is an image that is delineated in a treatment plan, and includes only a contour line of the to-be-registered area. For example, the image that is delineated in the treatment plan and includes only the contour line of the to-be-registered area may be a three-dimensional delineated contour obtained by delineating a contour of each area in the CT image obtained in a planning stage. The contour may be delineated by a therapist through operating an external device (e.g., a mouse) of a computer, or may be automatically delineated with a computer based on deep learning, or may be acquired with a computer based on technologies, such as edge detection, edge recognition, and feature extraction, and then corrected by a therapist. The obtained image that includes only the contour line of the to-be-registered area may be stored in a treatment plan system, so as to be acquired from the treatment plan system through communication connection during use. The contour line of the to-be-registered area may be, e.g., a range of a three-dimensional area corresponding to a focal area during radiotherapy, a position of an anatomical site, or a range of a three-dimensional area of a tumor and surrounding vascular tissues in an intracranial tumor resection. In this embodiment, the image that includes only the contour line of the to-be-registered area delineated in the treatment plan and can be used to quickly and accurately identify the to-be-registered area of interest for the therapist, and then quickly and accurately generate the first to-be-registered image and the second to-be-registered image.

S404: registering the first to-be-registered image and the second to-be-registered image.

In this embodiment, the first to-be-registered image and the second to-be-registered image are both three-dimensional images. A three-dimensional offset can be directly obtained by registering a three-dimensional image and another three-dimensional image based on the first to-be-registered image and the second to-be-registered image, to provide information required for a medical activity, for example, a deviation between an irradiation position of a radiation beam for treatment and a position of a target area during radiotherapy, or whether a to-be-excised part has moved during a surgical operation.

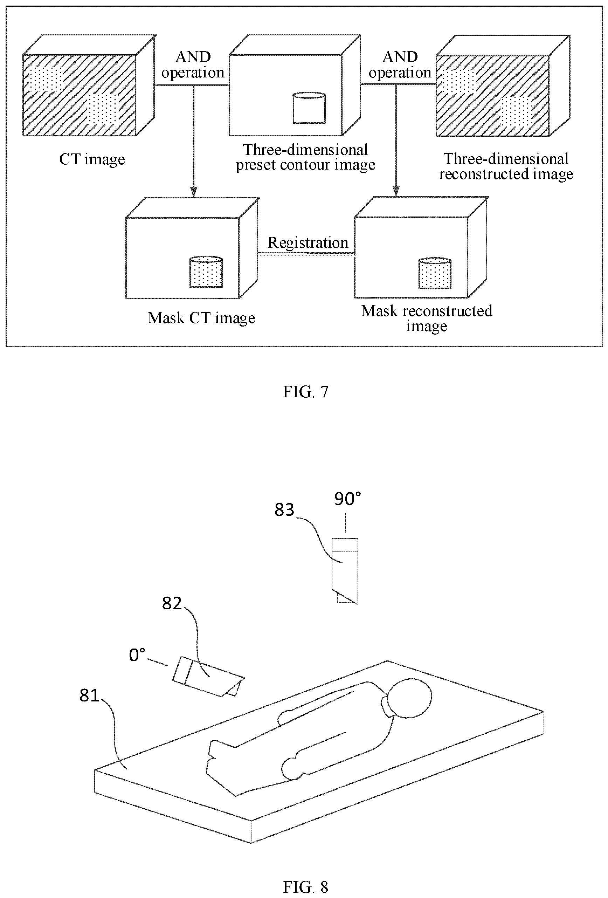

In order to facilitate better understanding of this embodiment, a specific implementation of a method for image registration provided in this embodiment will be described in detail below with reference to FIG. 7. As shown in FIG. 7, in this specific implementation, a three-dimensional preset contour image corresponds to an image that includes only an contour of a to-be-registered area, a mask CT image corresponds to a first to-be-registered image, and a mask reconstructed image corresponds to a second to-be-registered image. First, a CT image is acquired, and a logical AND operation is performed on the CT image and the three-dimensional preset contour image to obtain the mask CT image. Then, a three-dimensional reconstructed image obtained by reconstructing at least two KV images is acquired, and a logical AND operation is performed on the three-dimensional reconstructed image and the three-dimensional preset contour image to obtain the mask reconstructed image, so as to perform image registration based on the mask CT image and the mask reconstructed image. Since the mask CT image is obtained based on a CT image collected before radiotherapy, and the mask reconstructed image is obtained based on a KV image collected during radiotherapy, information required for a medical activity can be provided based on a registration result obtained by registering the mask CT image and the mask reconstructed image, for example, a three-dimensional deviation between an irradiation position of a radiation beam for treatment and a position of a target area during radiotherapy, or whether a to-be-excised part has moved during a surgical operation.

In the embodiment of the present disclosure, the at least two KV images are reconstructed to obtain the three-dimensional reconstructed image, the to-be-registered area is identified in the three-dimensional reconstructed image and the CT image respectively, the first to-be-registered image that includes only the to-be-registered area and the second to-be-registered image that includes only the to-be-registered area are generated, and then the first to-be-registered image and the second to-be-registered image are registered, to directly obtain a three-dimensional registration result. Since the first to-be-registered image includes only the to-be-registered area, and the second to-be-registered image includes only the to-be-registered area, registration based on the first to-be-registered image and the second to-be-registered image can avoid interferences with the to-be-registered area by other areas in the CT image and the three-dimensional reconstructed image during registration directly based on the CT image and the three-dimensional reconstructed image, thereby improving the registration precision. At the same time, since the first to-be-registered image includes only the to-be-registered area but excludes other areas in the CT image, and the second to-be-registered image includes only the to-be-registered area but excludes other areas in the three-dimensional reconstructed image, small size of data is used for registration based on the first to-be-registered image and the second to-be-registered image, thereby saving the time for registration and improving the speed of registration.

### Embodiment V

An application scenario diagram of a method for image registration provided in the embodiment of the present disclosure is used to describe in detail a specific application of the method for image registration provided in the embodiment of the present disclosure in a real-time image-guided process of radiotherapy. In this application scenario, the radiotherapy device performs real-time image-guided radiotherapy based on registration of a CT image taken by an imaging device before a treatment activity and KV images taken by two radiographing devices arranged relative to a patient fixing mechanism during treatment.

As shown in FIG. 8, in this application scenario, a radiotherapy device includes a patient fixing mechanism 81 and two radiographing devices 82 and 83. The two radiographing devices 82 and 83 are arranged at 90-degree intervals around the patient fixing mechanism 81. The description is provided below by way of an example of a shooting angle being 0 degree when a patient is lying on the patient fixing mechanism 81, the radiographing device 82 is on the right side of the patient, the radiographing device 83 is right above the patient, and the radiographing device is on the right side of the patient, and an affected part of the patient being a lung tumor. In this application scenario, a shooting angle of the radiographing device 82 is 0 degree, a shooting angle of the radiographing device 83 is 90 degrees, and then the two radiographing devices can radiograph the lung tumor at the shooting angle of 0 degree to obtain a KV image corresponding to 0 degree (referred to as a KV1 image below), and radiograph the lung tumor at the shooting angle of 90 degrees to obtain a KV image corresponding to 90 degrees (referred to as a KV2 image below). It should be noted that this application scenario is described by taking two radiographing devices separated by 90° as an example, which does not mean that the present disclosure is limited to this.

Then, the radiotherapy device acquires a CT image obtained by photographing the lung tumor with a CT imaging device before a treatment activity, and projects the CT image at the shooting angles of 0 degree and 90 degrees respectively to obtain two two-dimensional projection images, which are hereinafter referred to as DRR1 and DRR2 respectively. The radiotherapy device invokes an image that includes only a contour line of the lung tumor from a treatment plan system (referred to as a 3D RT contour below), and projects the 3D RT contour at the shooting angles of 0 degree and 90 degrees to obtain two two-dimensional mask images, which are referred to as MASK1 and MASK2 below. Then, a logical AND operation is performed on the MASK1 and the KV1 image to obtain a mask KV1 image that includes only the lung tumor, and a logical AND operation is performed on the MASK1 and the DRR1 to obtain a mask DRR1 that includes only the lung tumor. Similarly, a logical AND operation is performed on the MASK2 and the KV2 image to obtain a mask KV2 image that includes only the lung tumor, and a logical AND operation is performed on the MASK2 and the DRR2 to obtain a mask DRR2 that includes only the lung tumor. The mask DRR1 corresponds to the shooting angle of 0 degree, and the mask DRR2 corresponds to the shooting angle of 90 degrees. Then, a two-dimensional offset Δ2D1 of the lung tumor of the patient is obtained by image registration on the mask KV1 image and the mask DRR1, and a two two-dimensional offset Δ2D2 of the lung tumor of the patient is obtained by image registration on the mask KV2 image and the mask DRR2. A three-dimensional offset of the lung tumor of the patient can be obtained based on the Δ2D1 and the Δ2D2. Treatment of the patient is guided based on the three-dimensional offset, thereby reducing the radiotherapy error caused by the target area position change due to positioning or organ movement.

In this application scenario, after acquiring the KV1 image, the KV2 image, and the CT image, the two two-dimensional offsets Δ2D1 and Δ2D2 may also be determined by another approach.

Specifically, after acquiring the CT image, the radiotherapy device invokes the 3D RT contour from the treatment plan system, performs a logical AND operation on the 3D RT contour and the CT image to obtain a mask CT image, and then projects the mask CT image at the shooting angles of 0 degree and 90 degrees to obtain the mask DRR1 and the mask DRR2. In addition, the 3D RT contour is projected at the shooting angles of 0 degree and 90 degrees to obtain the mask images, which are referred to as the MASK1 image and the MASK2 image below, a logical AND operation is performed on the MASK1 image and the KV1 image to obtain the mask KV1 image, and a logical AND operation is performed on the MASK2 image and the KV2 image to obtain the mask KV2 image. Then, a two-dimensional offset Δ2D1 of the lung tumor of the patient is obtained by image registration on the mask KV1 image and the mask DRR1, and a two two-dimensional offset Δ2D2 of the lung tumor of the patient is obtained by image registration on the mask KV2 image and the mask DRR2. Then, the three-dimensional offset of the lung tumor of the patient can be obtained based on the Δ2D1 and the Δ2D2, for guiding the treatment of the patient.

It should be noted that the application scenario and the radiotherapy device shown in FIG. 8 are merely example descriptions, and may be adaptively changed based on different use demands. For example, the patient fixing mechanism may also be a bracket configured to fix a patient in an upright posture.

### Embodiment VI

An application scenario diagram of a method for image registration provided in the embodiment of the present disclosure is used to describe in detail another specific application of the method for image registration provided in the embodiment of the present disclosure in a real-time image-guided process of radiotherapy. This application scenario is different from the application scenario provided in Embodiment V of the present application in that, during treatment, KV images are taken by two radiographing devices that can rotate around a patient fixing mechanism.

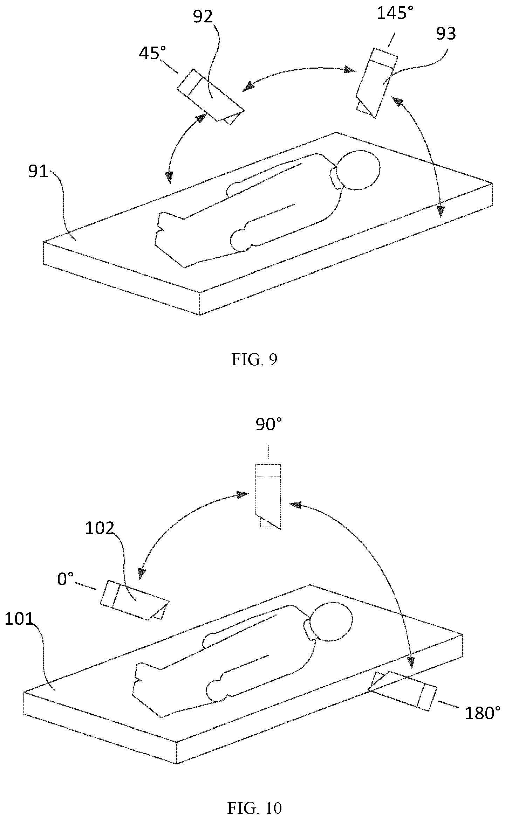

As shown in FIG. 9, in this application scenario, a radiotherapy device includes a patient fixing mechanism 91 and two radiographing devices 92 and 93. The two radiographing devices 92 and 93 can rotate around the patient fixing mechanism 91, thereby radiographing an affected part of a patient on the patient fixing mechanism 91 at a shooting angle of 0 degree to 360 degrees, and acquiring KV images at the shooting angle of 0 degree to 360 degrees. For example, the patient lies on the patient fixing mechanism 91, and the radiographing devices 92 and 93 can rotate around the patient within a range of 360 degrees in a vertical plane. The shooting angle is 0 degree when the radiographing devices 92 and 93 are on the right side of the patient, is 90 degrees when the radiographing devices 92 and 93 are right above the patient, is 180 degrees when the radiographing devices 92 and 93 are on the left side of the patient, and is 270 degrees when the radiographing devices 92 and 93 are right below the patient. In this application scenario, the radiographing device 92 rotates to the upper right of the patient, to radiograph the lung tumor at a shooting angle of 45 degrees, and obtain a KV image corresponding to 45 degrees, which is referred to as a KV1 image below; and the radiographing device 93 rotates to the upper left of the patient, to radiograph the lung tumor at a shooting angle of 135 degrees, and obtain a KV image corresponding to 135 degrees, which is referred to as a KV2 image below. It should be understood that the application scenario shown in FIG. 9 is merely an example description, and may be adaptively changed based on different use demands. For example, only one of the radiographing devices 92 and 93 can rotate around the patient fixing mechanism 91, at least one of the radiographing devices 92 and 93 can rotate only within a range of 180 degrees (left, above, and right) of the patient, a plane where a rotation trajectory of the radiographing devices 92 and 93 is located may also be a horizontal plane, a tapered plane, or other planes, and the patient fixing mechanism may also be a bracket configured to fix a patient in an upright posture.

In this application scenario, not only is the approach of acquiring the KV1 image and the KV2 image different from that in Embodiment V of the present disclosure, but also other processing of the radiotherapy device is similar to that in Embodiment V of the present disclosure. In order to avoid repetition, the description will not be repeated here.

### Embodiment VII

An application scenario of a method for image registration provided in the embodiment of the present disclosure is used to describe in detail another specific application of the method for image registration provided in the embodiment of the present disclosure in a real-time image-guided process of radiotherapy. In this application scenario, a controller of a radiotherapy device performs image-guided correction of positioning errors based on registration of a CT image taken by a CT imaging device before a treatment activity and a KV image of a patient positioned on a patient fixing mechanism taken by the radiographing device 92.

As shown in FIG. 10, in this application scenario, the radiotherapy device includes a patient fixing mechanism 101 and a radiographing device 102. The radiographing device 102 can rotate around the patient fixing mechanism 101, thereby radiographing an affected part of a patient on the patient fixing mechanism 101 at a shooting angle of 0 degree to 360 degrees, and acquiring the KV image at the shooting angle of 0 degree to 360 degrees. For example, the patient lies on the patient fixing mechanism 101, and the radiographing device 102 can rotate around the patient within a range of 360 degrees in a vertical plane. The shooting angle is 0 degree when the radiographing device 102 is on the right side of the patient, is 90 degrees when the radiographing device 102 is right above the patient, is 180 degrees when the radiographing device 102 is on the left side of the patient, and is 270 degrees when the radiographing device 102 is right below the patient. It should be understood that the application scenario shown in FIG. 10 is merely an example description, and may be adaptively changed based on different use demands. For example, the radiographing device 102 can rotate only within a range of 180 degrees (left, above, and right) of the patient, a plane where a rotation trajectory of the radiographing device is located may also be a horizontal plane, a tapered plane, or other planes, and the patient fixing mechanism may also be a bracket configured to fix a patient in an upright posture.

In this application scenario, after positioning the patient on the patient fixation mechanism, the controller of the radiotherapy device controls the radiographing device 102 to rotate around the patient fixation mechanism 101, and take medical images of the affected part of the patient at N shooting angles, thus acquiring N KV images. It should be understood that the N shooting angles may be equally distributed. In this application scenario, the description is provided by way of an example of N being 36, N shooting angles being 0°, 10°, 20°, ..., 340°, and 350°, and the affected part of the patient being a lung tumor.

The radiographing device rotates around the patient fixing mechanism 101, to radiograph the lung tumor of the patient at shooting angles of 0°, 10°, 20°, ..., 340°, and 350° respectively, and obtain 36 KV images at the shooting angles of 0°, 10°, 20°, ..., 340°, and 350°. Subsequently, the radiotherapy device obtains a three-dimensional reconstructed image by three-dimensional reconstruction on the 36 KV images, and obtains a lung tumor image at a current position of the patient.

Then, the radiotherapy device acquires the CT image obtained by photographing the lung tumor with the CT imaging device before the treatment activity, and invokes an image that includes only a contour line of the lung tumor from a treatment plan system, which is referred to as a 3D RT contour below. The radiotherapy device performs a logical AND operation on the 3D RT contour and the three-dimensional reconstructed image to obtain a mask three-dimensional reconstructed image, and performs a logical AND operation on the 3D RT contour and the CT image to obtain a mask CT image, thereby obtaining a three-dimensional offset by image registration based on the mask three-dimensional reconstructed image and the mask CT image, for guiding the movement of the patient fixing mechanism, and ensuring the consistency of a treatment isocenter and a target area of the patient.

### Embodiment VIII

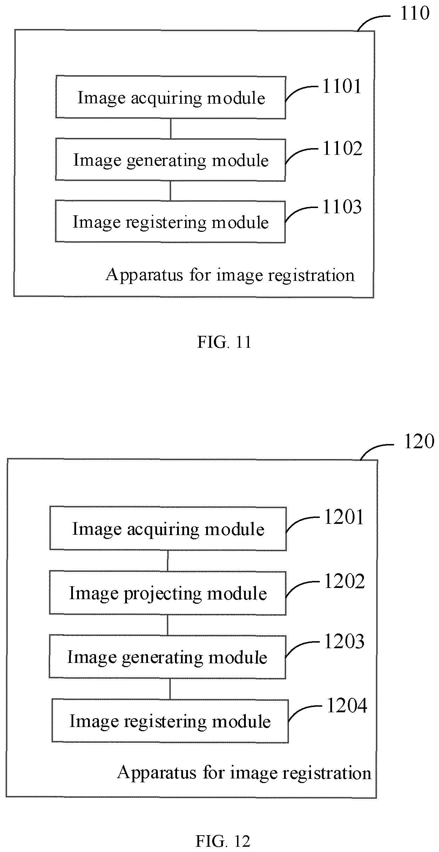

FIG. 11 is a schematic structural diagram of an apparatus for image registration provided in the embodiment of the present disclosure. The apparatus for image registration provided in this embodiment is configured to execute the method for image registration provided in Embodiment I of the present disclosure. As shown in FIG. 11, the apparatus for image registration provided in this embodiment may include:
an image acquiring module 1101 configured to acquire a first image and a second image;
an image generating module 1102 configured to identify a to-be-registered area in the first image and the second image respectively, and generate a first to-be-registered image that includes only the to-be-registered area and a second to-be-registered image that includes only the to-be-registered area; and
an image registering module 1103 configured to register the first to-be-registered image and the second to-be-registered image.

Alternatively, in an embodiment of the present disclosure, the image generating module 1102 is specifically configured to:
identify the to-be-registered area in the first image and the second image using an image that includes only a contour of the to-be-registered area, and generate the first to-be-registered image that includes only the to-be-registered area and the second to-be-registered image that includes only the to-be-registered area.

Alternatively, in an embodiment of the present disclosure, the image generating module 1102 is specifically configured to:
perform a logical AND operation on the image that includes only the contour of the to-be-registered area and the first image to obtain the first to-be-registered image that includes only the to-be-registered area, and perform a logical AND operation on the image that includes only the contour of the to-be-registered area and the second image to obtain the second to-be-registered image that includes only the to-be-registered area.

The apparatus for image registration provided in this embodiment is configured to execute the method for image registration provided in Embodiment I of the present disclosure, and has similar technical principles and technical effects. The description will not be repeated here.

### Embodiment IX

FIG. 12 is a schematic structural diagram of an apparatus for image registration provided in the embodiment of the present disclosure. The apparatus for image registration provided in this embodiment is configured to execute the method for image registration provided in Embodiment II of the present disclosure. As shown in FIG. 12, the apparatus for image registration provided in this embodiment may include:
an image acquiring module 1201 configured to acquire a computed tomography (CT) image and a KV image of a target object, the KV image being an image obtained by imaging the target object at a preset shooting angle;
an image projecting module 1202 configured to project the CT image at the preset shooting angle to obtain a two-dimensional projection image;
an image generating module 1203 configured to identify a to-be-registered area in the two-dimensional projection image and the KV image respectively, and generate a first to-be-registered image that includes only the to-be-registered area and a second to-be-registered image that includes only the to-be-registered area; and
an image registering module 1204 configured to register the first to-be-registered image and the second to-be-registered image.

Alternatively, in an embodiment of the present disclosure, the image generating module 1203 is specifically configured to:
identify the to-be-registered area in the two-dimensional projection image and the KV image respectively using an image that includes only a contour of the to-be-registered area, and generate the first to-be-registered image that includes only the to-be-registered area and the second to-be-registered image that includes only the to-be-registered area.

Alternatively, in an embodiment of the present disclosure, the image generating module 1203 is specifically configured to:
project the image that includes only the contour of the to-be-registered area at the preset shooting angle to obtain a two-dimensional mask image;
generate the first to-be-registered image that includes only the to-be-registered area based on the two-dimensional projection image and the two-dimensional mask image; and
generate the second to-be-registered image that includes only the to-be-registered area based on the KV image and the two-dimensional mask image.

Alternatively, in an embodiment of the present disclosure, the image generating module 1203 is specifically configured to:
perform a logical AND operation on the two-dimensional mask image and the two-dimensional projection image to generate the first to-be-registered image that includes only the to-be-registered area; and
perform a logical AND operation on the two-dimensional mask image and the KV image to generate the second to-be-registered image that includes only the to-be-registered area.

Alternatively, in an embodiment of the present disclosure, the image that includes only the contour of the to-be-registered area is: an image that is delineated in a treatment plan, and includes only a contour line of the to-be-registered area.

The apparatus for image registration provided in this embodiment is configured to execute the method for image registration provided in Embodiment II of the present disclosure, and has similar technical principles and technical effects. The description will not be repeated here.

### Embodiment X

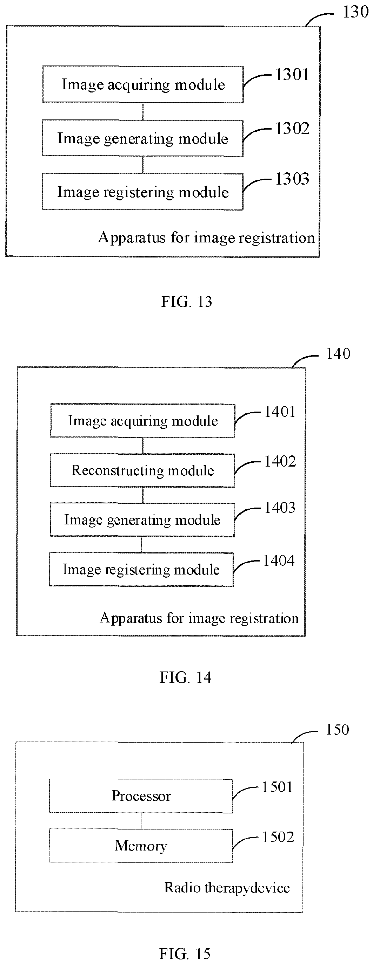

FIG. 13 is a schematic structural diagram of an apparatus for image registration provided in the embodiment of the present disclosure. The apparatus for image registration provided in this embodiment is configured to execute the method for image registration provided in Embodiment III of the present disclosure. As shown in FIG. 13, the apparatus for image registration provided in this embodiment may include:
an image acquiring module 1301 configured to acquire a computed tomography (CT) image and a KV image of a target object, the KV image being an image obtained by imaging the target object at a preset shooting angle;
an image generating module 1302 configured to identify a to-be-registered area in the CT image and the KV image respectively, and generate a first to-be-registered image that includes only the to-be-registered area and a second to-be-registered image that includes only the to-be-registered area; and
an image registering module 1303 configured to register the first to-be-registered image and the second to-be-registered image.

Alternatively, in an embodiment of the present disclosure, the image generating module 1302 is specifically configured to:
identify the to-be-registered area in the CT image and the KV image respectively using an image that includes only a contour of the to-be-registered area, and generate the first to-be-registered image that includes only the to-be-registered area and the second to-be-registered image that includes only the to-be-registered area.

Alternatively, in an embodiment of the present disclosure, the image generating module 1302 is specifically configured to:
generate a mask CT image based on the CT image and the image that includes only the contour of the to-be-registered area;
project the mask CT image at the preset shooting angle to obtain the first to-be-registered image;
project the image that includes only the contour of the to-be-registered area at the preset shooting angle to obtain a two-dimensional mask image; and
generate the second to-be-registered image based on the KV image and the two-dimensional mask image.

Alternatively, in an embodiment of the present disclosure, the image generating module 1302 is specifically configured to:
perform a logical AND operation on the two-dimensional mask image and the KV image to generate the second to-be-registered image that includes only the to-be-registered area.

Alternatively, in an embodiment of the present disclosure, the image that includes only the contour of the to-be-registered area is: an image that is delineated in a treatment plan, and includes only a contour line of the to-be-registered area.

The apparatus for image registration provided in this embodiment is configured to execute the method for image registration provided in Embodiment III of the present disclosure, and has similar technical principles and technical effects. The description will not be repeated here.

### Embodiment XI

FIG. 14 is a schematic structural diagram of an apparatus for image registration provided in the embodiment of the present disclosure. The apparatus for image registration provided in this embodiment is configured to execute the method for image registration provided in Embodiment III of the present disclosure. As shown in FIG. 14, the apparatus for image registration provided in this embodiment may include:
an image acquiring module 1401 configured to acquire at least two KV images and a computed tomography (CT) image of a target object, the at least two KV images being images obtained by imaging the target object at at least two preset shooting angles;
an image reconstructing module 1402 configured to reconstruct the at least two KV images to obtain a three-dimensional reconstructed image;
an image generating module 1403 configured to identify a to-be-registered area in the three-dimensional reconstructed image and the CT image respectively, and generate a first to-be-registered image that includes only the to-be-registered area and a second to-be-registered image that includes only the to-be-registered area; and
an image registering module 1404 configured to register the first to-be-registered image and the second to-be-registered image.

Alternatively, in an embodiment of the present disclosure, the image generating module 1403 is specifically configured to:
identify the to-be-registered area in the three-dimensional reconstructed image and the CT image respectively using an image that includes only a contour of the to-be-registered area, and generate the first to-be-registered image that includes only the to-be-registered area and the second to-be-registered image that includes only the to-be-registered area.

Alternatively, in an embodiment of the present disclosure, the image generating module 1403 is specifically configured to:
identify the to-be-registered area in the three-dimensional reconstructed image and the CT image respectively using an image that includes only a contour of the to-be-registered area, and generate the first to-be-registered image that includes only the to-be-registered area and the second to-be-registered image that includes only the to-be-registered area.

Alternatively, in an embodiment of the present disclosure, the image generating module 1403 is specifically configured to:
perform a logical AND operation on the image that includes only the contour of the to-be-registered area and the three-dimensional reconstructed image to obtain the first to-be-registered image, and perform a logical AND operation on the image that includes only the contour of the to-be-registered area and the CT image to obtain the second to-be-registered image.

Alternatively, in an embodiment of the present disclosure, the image that includes only the contour of the to-be-registered area is: an image that is delineated in a treatment plan, and includes only a contour line of the to-be-registered area.

The apparatus for image registration provided in this embodiment is configured to execute the method for image registration provided in Embodiment IV of the present disclosure, and has similar technical principles and technical effects. The description will not be repeated here.

### Embodiment XII

FIG. 15 is a schematic structural diagram of a radiotherapy device provided in the embodiment of the present disclosure. The radiotherapy device provided in this embodiment is configured to execute the method for image registration provided in any embodiment of the method of the present disclosure. As shown in FIG. 15, a radiotherapy device 150 provided in this embodiment may include: a processor 1501 and a memory 1502. The memory 1502 stores program instructions. The processor 1501 is configured to invoke the program instructions in the memory 1502 to execute the method for image registration provided in any embodiment of the method of the present disclosure.

The processor 1501 may include a central processing unit (a single-core CPU or a multi-core CPU), a graphics processing unit (GPU), a microprocessor, an Application-Specific Integrated Circuit (ASIC), a digital signal processor (DSP), a digital signal processing device (DSPD), a programmable logic device (PLD), a field programmable gate array (FPGA), a controller, a microcontroller, or a plurality of integrated circuits configured to control program execution.

The memory 1502 may include a read-only memory (ROM) or other types of static storage devices that can store static information and instructions, and a random access memory (RAM) or other types of dynamic storage devices that can store information and instructions; may also include an electrically erasable programmable read-only memory (EEPROM), a Compact Disc Read-Only Memory (CD-ROM) or other optical disk storage, compact disk storage (including compressed disk, laser disk, compact disk, digital universal disk, Blu-ray disk, or the like), magnetic disk storage medium or other magnetic storage devices, or any other medium that can be configured to carry or store desired program codes in the form of instructions or data structures and can be accessed by a computer, but is not limited to the above ones. The memory 1502 may be independently provided, or integrated with the processor 1501.

In a specific implementation, as an embodiment, the processor 1501 may include one or more CPUs. In a specific implementation, as an embodiment, the radiotherapy device may include a plurality of processors. Each of these processors may be a single-core processor or a multi-core processor. The processor here may refer to one or more devices, circuits, and/or processing cores for processing data (e.g., computer program instructions).

Any embodiment of method of the present disclosure may be referred to for a specific execution process of the radiotherapy device, and which has similar implementation principles and technical effects. The description will not be repeated here in this embodiment.

### Embodiment XIII

The embodiment of the present disclosure provides a computer-readable storage medium, storing a computer program thereon, where the computer program, when executed by a processor, implements the method for image registration provided in any embodiment of the method of the present disclosure.

It should be understood by those skilled in the art, the embodiments of the present disclosure may be provided as a method, an apparatus (device), or a computer program product. Accordingly, the present disclosure may take the form of an entirely hardware embodiment, an entirely software embodiment, or an embodiment combining software and hardware. Further, the present disclosure may take the form of a computer program product embodied in one or more computer-readable storage mediums (including, but not limited to, a disk memory, a CD-ROM, an optical memory, and the like) having computer-readable program code embodied thereon. The computer program is stored/distributed in an appropriate medium, provided with other hardware or as a part of the hardware, or may be distributed in other forms, such as through the Internet or other wired or wireless telecommunication systems.

The present disclosure is described with reference to the flowcharts and/or block diagrams of the method, the apparatus (device), and the computer program product in the embodiments of the present disclosure. It should be understood that each process and/or block in the flow charts and/or block diagrams as well as combinations of processes and/or blocks in the flow charts and/or block diagrams may be implemented by computer program instructions. The computer program instructions may be provided to a processor of a general purpose computer, a special purpose computer, an embedded processor, or other programmable data processing devices to produce a machine, such that the instructions executed via the processor of the computer or other programmable data processing devices create an apparatus for implementing the functions specified in one or more processes in the flow charts and/or one or more blocks in the block diagrams.

These computer program instructions may also be stored in a computer-readable memory that can direct a computer or other programmable data processing devices to function in a particular manner, such that the instructions stored in the computer-readable memory produce an article of manufacture including an instruction apparatus which implements the functions specified in one or more processes in the flow charts and/or one or more blocks in the block diagrams.

The computer program instructions may also be loaded onto a computer or other programmable data processing devices, to cause a series of operational steps to be performed on the computer or other programmable devices, to produce a computer implemented process, such that the instructions executed on the computer or other programmable devices provide steps for implementing the functions specified in one or more processes in the flow charts and/or one or more blocks in the block diagrams.

The above description merely provides embodiments of the present disclosure, and is not intended to limit the present disclosure. For those skilled in the art, the present disclosure may have various modifications and alterations. Any modification, equivalent replacement, improvement, and the like made within the spirit and principles of the present disclosure should be included within the scope of the appended claims of the present disclosure.

## Claims

**1.** A method for image registration, comprising:
acquiring a first image and a second image;
identifying a to-be-registered area in the first image and the second image respectively, and generating a first to-be-registered image that comprises only the to-be-registered area and a second to-be-registered image that comprises only the to-be-registered area; and
registering the first to-be-registered image and the second to-be-registered image.

**2.** The method according to claim 1, wherein the identifying a to-be-registered area in the first image and the second image respectively, and generating a first to-be-registered image that comprises only the to-be-registered area and a second to-be-registered image that comprises only the to-be-registered area comprises:
identifying the to-be-registered area in the first image and the second image using an image that comprises only a contour of the to-be-registered area, and generating the first to-be-registered image that comprises only the to-be-registered area and the second to-be-registered image that comprises only the to-be-registered area.

**3.** The method according to claim 2, wherein the identifying the to-be-registered area in the first image and the second image using an image that comprises only a contour of the to-be-registered area, and generating the first to-be-registered image that comprises only the to-be-registered area and the second to-be-registered image that comprises only the to-be-registered area comprises:
performing a logical AND operation on the image that comprises only the contour of the to-be-registered area and the first image to obtain the first to-be-registered image that comprises only the to-be-registered area, and performing a logical AND operation on the image that comprises only the contour of the to-be-registered area and the second image to obtain the second to-be-registered image that comprises only the to-be-registered area.

**4.** A method for image registration, comprising:
acquiring a computed tomography (CT) image and a KV image of a target object, the KV image being an image acquired by imaging the target object at a preset shooting angle;
projecting the CT image at the preset shooting angle to obtain a two-dimensional projection image;
identifying a to-be-registered area in the two-dimensional projection image and the KV image respectively, and generating a first to-be-registered image that comprises only the to-be-registered area and a second to-be-registered image that comprises only the to-be-registered area; and
registering the first to-be-registered image and the second to-be-registered image.

**5.** The method according to claim 4, wherein the identifying a to-be-registered area in the two-dimensional projection image and the KV image respectively, and generating a first to-be-registered image that comprises only the to-be-registered area and a second to-be-registered image that comprises only the to-be-registered area comprises:
identifying the to-be-registered area in the two-dimensional projection image and the KV image respectively using an image that comprises only a contour of the to-be-registered area, and generating the first to-be-registered image that comprises only the to-be-registered area and the second to-be-registered image that comprises only the to-be-registered area.

**6.** The method according to claim 5, wherein the identifying the to-be-registered area in the two-dimensional projection image and the KV image using an that comprises only a contour of the to-be-registered area, and generating the first to-be-registered image that comprises only the to-be-registered area and the second to-be-registered image that comprises only the to-be-registered area comprises:
projecting the image that comprises only the contour of the to-be-registered area at the preset shooting angle to obtain a two-dimensional mask image;
generating the first to-be-registered image that comprises only the to-be-registered area based on the two-dimensional projection image and the two-dimensional mask image; and
generating the second to-be-registered image that comprises only the to-be-registered area based on the KV image and the two-dimensional mask image.

**7.** The method according to claim 5, wherein
the generating the first to-be-registered image that comprises only the to-be-registered area based on the two-dimensional projection image and the two-dimensional mask image comprises:
performing a logical AND operation on the two-dimensional mask image and the two-dimensional projection image to generate the first to-be-registered image that comprises only the to-be-registered area; and
the generating the second to-be-registered image that comprises only the to-be-registered area based on the KV image and the two-dimensional mask image comprises:
performing a logical AND operation on the two-dimensional mask image and the KV image to generate the second to-be-registered image that comprises only the to-be-registered area.

**8.** A method for image registration, comprising:
acquiring a computed tomography (CT) image and a KV image of a target object, the KV image being an image obtained by imaging the target object at a preset shooting angle;
identifying a to-be-registered area in the CT image and the KV image respectively, and generating a first to-be-registered image that comprises only the to-be-registered area and a second to-be-registered image that comprises only the to-be-registered area; and registering the first to-be-registered image and the second to-be-registered image.

**9.** The method according to claim 8, wherein the identifying a to-be-registered area in the CT image and the KV image respectively, and generating a first to-be-registered image that comprises only the to-be-registered area and a second to-be-registered image that comprises only the to-be-registered area comprises:
identifying the to-be-registered area in the CT image and the KV image respectively using an image that comprises only a contour of the to-be-registered area, and generating the first to-be-registered image that comprises only the to-be-registered area and the second to-be-registered image that comprises only the to-be-registered area.

**10.** The method according to claim 9, wherein the identifying the to-be-registered area in the CT image and the KV image respectively using an image that comprises only a contour of the to-be-registered area, and generating the first to-be-registered image that comprises only the to-be-registered area and the second to-be-registered image that comprises only the to-be-registered area comprises:
generating a mask CT image based on the CT image and the image that comprises only the contour of the to-be-registered area;
projecting the mask CT image at the preset shooting angle to obtain the first to-be-registered image;
projecting the image that comprises only the contour of the to-be-registered area at the preset shooting angle to obtain a two-dimensional mask image; and
generating the second to-be-registered image based on the KV image and the two-dimensional mask image.11. The method according to claim 10, wherein the generating the second to-be-registered image based on the KV image and the two-dimensional mask image comprises:
performing a logical AND operation on the two-dimensional mask image and the KV image to generate the second to-be-registered image that comprises only the to-be-registered area.

**12.** A method for image registration, comprising:
acquiring a computed tomography (CT) image and at least two KV images of a target object, the at least two KV images being images acquired by imaging the target object at at least two preset shooting angles respectively;
reconstructing the at least two KV images to obtain a three-dimensional reconstructed image;
identifying a to-be-registered area in the three-dimensional reconstructed image and the CT image respectively, and generating a first to-be-registered image that comprises only the to-be-registered area and a second to-be-registered image that comprises only the to-be-registered area; and
registering the first to-be-registered image and the second to-be-registered image.

**13.** The method according to claim 12, wherein the identifying a to-be-registered area in the three-dimensional reconstructed image and the CT image respectively, and generating a first to-be-registered image that comprises only the to-be-registered area and a second to-be-registered image that comprises only the to-be-registered area comprises:
identifying the to-be-registered area in the three-dimensional reconstructed image and the CT image respectively using an image that comprises only a contour of the to-be-registered area, and generating the first to-be-registered image that comprises only the to-be-registered area and the second to-be-registered image that comprises only the to-be-registered area.

**14.** The method according to claim 13, wherein the identifying the to-be-registered area in the three-dimensional reconstructed image and the CT image respectively using an image that comprises only a contour of the to-be-registered area, and generating the first to-be-registered image that comprises only the to-be-registered area and the second to-be-registered image that comprises only the to-be-registered area comprises:
performing a logical AND operation on the image that comprises only the contour of the to-be-registered area and the three-dimensional reconstructed image to obtain the first to-be-registered image, and performing a logical AND operation on the image that comprises only the contour of the to-be-registered area and the CT image to obtain the second to-be-registered image.

**15.** The method according to any one of claims 5-7, 9-11, and 13-14, wherein the image that comprises only the outer contour of the to-be-registered area is: an image that comprises only a contour line of the to-be-registered area which is delineated in a treatment plan.

**16.** An apparatus for image registration, comprising:
an image acquiring module configured to acquire a first image and a second image;
an image generating module configured to identify a to-be-registered area in the first image and the second image respectively, and generate a first to-be-registered image that comprises only the to-be-registered area and a second to-be-registered image that comprises only the to-be-registered area; and
an image registering module configured to register the first to-be-registered image and the second to-be-registered image.

**17.** The apparatus according to claim 16, wherein the image generating module is specifically configured to:
identify the to-be-registered area in the first image and the second image using an image that comprises only an outer contour of the to-be-registered area, and generate the first to-be-registered image that comprises only the to-be-registered area and the second to-be-registered image that comprises only the to-be-registered area.

**18.** An apparatus for image registration, comprising:
an image acquiring module configured to acquire a computed tomography CT image and a KV image of a target object, the KV image being an image obtained by imaging the target object at a preset shooting angle;
an image projecting module configured to project the CT image at the preset shooting angle to obtain a two-dimensional projection image;
an image generating module configured to identify a to-be-registered area in the two-dimensional projection image and the KV image respectively, and generate a first to-be-registered image that comprises only the to-be-registered area and a second to-be-registered image that comprises only the to-be-registered area; and
an image registering module configured to register the first to-be-registered image and the second to-be-registered image.

**19.** The apparatus according to claim 18, wherein the image generating module is specifically configured to:
identify the to-be-registered area in the two-dimensional projection image and the KV image respectively using an image that comprises only an outer contour of the to-be-registered area, and generate the first to-be-registered image that comprises only the to-be-registered area and the second to-be-registered image that comprises only the to-be-registered area.

**20.** An apparatus for image registration, comprising:
an image acquiring module configured to acquire a computed tomography (CT) image and a KV image of a target object, the KV image being an image obtained by imaging the target object at a preset shooting angle;
an image generating module configured to identify a to-be-registered area in the CT image and the KV image respectively, and generate a first to-be-registered image that comprises only the to-be-registered area and a second to-be-registered image that comprises only the to-be-registered area; and
an image registering module configured to register the first to-be-registered image and the second to-be-registered image.

**21.** The apparatus according to claim 20, wherein the image generating module is specifically configured to:
identify the to-be-registered area in the CT image and the KV image respectively using an image that comprises only the to-be-registered area, and generate the first to-be-registered image that comprises only the to-be-registered area and the second to-be-registered image that comprises only the to-be-registered area.

**22.** An apparatus for image registration, comprising:
an image acquiring module configured to acquire a computed tomography (CT) image and at least two KV images of a target object, the at least two KV images being images obtained by imaging the target object at at least two preset shooting angles respectively;
an image reconstructing module configured to reconstruct the at least two KV images to obtain a three-dimensional reconstructed image;
an image generating module configured to identify a to-be-registered area in the three-dimensional reconstructed image and the CT image respectively, and generate a first to-be-registered image that comprises only the to-be-registered area and a second to-be-registered image that comprises only the to-be-registered area; and
an image registering module configured to register the first to-be-registered image and the second to-be-registered image.

**23.** The apparatus according to claim 22, wherein the image generating module is specifically configured to:
identify the to-be-registered area in the three-dimensional reconstructed image and the CT image respectively using an image that comprises only the to-be-registered area, and generate the first to-be-registered image that comprises only the to-be-registered area and the second to-be-registered image that comprises only the to-be-registered area.

**24.** A radiotherapy device, comprising a processor and a memory, the memory storing program instructions, the processor being configured to invoke the program instructions in the memory to execute the method according to any one of claims 1-15.

**25.** A computer storage medium, storing a computer program, wherein the computer program comprises program instructions, and the program instructions when executed by a processor, causes the processor to execute the method according to any one of claims 1-15.
